# EUROPÄISCHE PATENTANMELDUNG

(11) **EP 3 282 245 A1**
(43) Veröffentlichungstag der Anmeldung: **14.02.2018**
(21) Anmeldenummer: 17184598.5
(22) Anmeldetag: 02.08.2017
(51) Int. Cl.: G01N 21/85, B29C 47/74, B29C 47/92

(54) **VORRICHTUNG UND VERFAHREN ZUR ANALYSE EINES MATERIALSTROMS**

(30) Priorität: 08.08.2016 DE 102016009650
(71) Anmelder: Blue Ocean Nova AG, 73569 Eschach (DE); Hochschule Reutlingen, 72762 Reutlingen (DE)
(72) Erfinder: Mannhardt, Joachim, 73569 Eschach (DE); Ostertag, Edwin, 72762 Reutlingen (DE); Bäuerle, Tim, 72116 Mössingen (DE); Lorenz, Günter, 72072 Tübingen (DE); Rebner, Karsten, 72762 Reutlingen (DE)
(74) Vertreter: Raunecker, Klaus Peter

(57) **Zusammenfassung**

Die Erfindung betrifft eine Vorrichtung und Verfahren zur Analyse eines Materialstroms (S) mit einem Einlassbereich (E), einem Messbereich (M) und einen Auslassbereich (A) sowie mit einer ersten Weiche (W1) und einer zweiten Weiche (W2) und einem Umlenkbereich (U), wobei die beiden Weichen (W1, W2) in einem ersten Schaltzustand (Z1) einen durchgängigen ersten Materialdurchströmungsraum vom Einlassbereich (E) über die erste Weiche (W1) durch den Messbereich (M) über die zweite Weiche (W2) bis zum Auslassbereich (A) ausbilden und in einem zweiten Schaltzustand einen durchgängigen zweiten Materialdurchströmungsraum vom Einlassbereich (E) über die erste Weiche (W1) durch den Umlenkbereich (U) über die zweite Weiche (W2) bis zum Auslassbereich (A) ausbilden.

## Beschreibung

Die Erfindung betrifft eine Vorrichtung und ein Verfahren zur Analyse eines Materialstroms.

In vielen Produktionsprozessen müssen Materialströme analysiert werden. Dabei kann es sich um gasförmige, flüssige oder feste (rieselfähige) Materialströme handeln. Gängige Analyseverfahren erfolgen kontaktlos zum Materialstrom, z.B. mittels Spektroskopie transmissiv und/oder reflektiv durch Beobachtungsfenster oder mittels an den Materialstrom angelegten oder in ihn eintauchender Sonden. Allen Analyseverfahren gemeinsam ist, dass sowohl die Sonden als auch die Messfenster mit der Zeit verunreinigt oder beschädigt werden und eine Reinigung oder Reparatur im Messbereich ohne Störung des Materialstroms nicht ohne Weiteres möglich ist.

Es ist daher Aufgabe der Erfindung, eine Vorrichtung und ein Verfahren zur Analyse eines Materialstroms anzugeben, welche eine Reinigung oder Reparatur einer für die Analyse erforderlichen Messeinrichtung ermöglichen ohne dabei den Materialstrom zu stören.

Die Aufgabe wird bezüglich der Vorrichtung zur Analyse eines Materialstroms erfindungsgemäß dadurch gelöst, dass sie mit einem Materialdurchströmungsraum versehen ist und in Durchströmungsrichtung aufweist: einen Einlassbereich, einen Messbereich, ausgebildet zur Messung von Eigenschaften des Materialstroms und einen Auslassbereich, wobei die Vorrichtung zusätzlich aufweist: eine erste Weiche, angeordnet zwischen dem Einlassbereich und dem Messbereich, eine zweite Weiche, angeordnet zwischen dem Messbereich und dem Auslassbereich sowie einen Umlenkbereich des Materialdurchströmungsraums, welche derart angeordnet und eingerichtet sind, dass in einem ersten Schaltzustand der ersten Weiche und der zweiten Weiche ein durchgängiger erster Materialdurchströmungsraum vom Einlassbereich über die erste Weiche durch den Messbereich über die zweite Weiche bis zum Auslassbereich ausgebildet ist, und dass in einem zweiten Schaltzustand der ersten Weiche und der zweiten Weiche ein durchgängiger zweiter Materialdurchströmungsraum vom Einlassbereich über die erste Weiche durch den Umlenkbereich über die zweite Weiche bis zum Auslassbereich ausgebildet ist.

Eine solche erfindungsgemäße Vorrichtung zur Analyse eines Materialstroms stellt in dem ersten Schaltzustand (der ersten Weiche und der zweiten Weiche) einen durchgängigen ersten Materialdurchströmungsraum (vom Einlassbereich über die erste Weiche durch den Messbereich über die zweite Weiche bis zum Auslassbereich) bereit, durch den der Materialstrom ungehindert fließen kann während im Messbereich dieses Materialdurchströmungsraums die Analyse des Materialstroms erfolgen kann. Hingegen steht in dem zweiten Schaltzustand (der ersten Weiche und der zweiten Weiche) ein durchgängiger zweiter Materialdurchströmungsraum (vom Einlassbereich über die erste Weiche durch den Umlenkbereich über die zweite Weiche bis zum Auslassbereich) bereit, durch den der Materialstrom ungehindert fließen kann während der Messbereich gereinigt oder repariert werden kann.

Der Messbereich ist mit üblichen Mitteln zur Messung von Eigenschaften des Materialstroms ausgebildet, insbesondere mit kontaktlos messenden Einrichtungen (transmissiv und/oder reflektiv spektroskopisch) oder kontaktiv messenden, an den Materialstrom angelegten oder in ihn eintauchender Sonden.

In einer vorteilhaften Weiterbildung der erfindungsgemäßen Vorrichtung zur Analyse eines Materialstroms ist die erste Weiche ausgebildet als erste Schiebeweiche, welche in den ersten Materialdurchströmungsraum zwischen den Einlassbereich und den Messbereich einschiebbar ist und welche eine erste Durchtrittsöffnung für einen Durchtritt des Materialstroms vom Einlassbereich durch die erste Schiebeweiche in den Messbereich aufweist und welche eine zweite Durchtrittsöffnung für einen Durchtritt des Materialstroms vom Einlassbereich durch die erste Schiebeweiche in den Umlenkbereich aufweist, und/oder ist die zweite Weiche ausgebildet als zweite Schiebeweiche, welche in den ersten Materialdurchströmungsraum zwischen den Messbereich und den Auslassbereich einschiebbar ist und welche eine erste Durchtrittsöffnung für einen Durchtritt des Materialstroms vom Messbereich durch die zweite Schiebeweiche in den Auslassbereich aufweist und welche eine zweite Durchtrittsöffnung für einen Durchtritt des Materialstroms vom Umlenkbereich durch die zweite Schiebeweiche in den Auslassbereich aufweist, welche derart angeordnet und eingerichtet sind, dass in jedem Schaltzustand in jeder Schiebeweiche jeweils eine Durchtrittsöffnung einem Materialdurchströmungsraum zugewendet ist.

Eine solche Schiebeweiche ist in Hinsicht auf ihre äußere Form dabei vorzugsweise als Zylinder ausgebildet. Denkbar sind jedoch auch andere äußere Formen, z.B. eine Quaderform. Alternativ zu einer Ausgestaltung als Schiebeweiche können auch eine oder beide Weichen als Klappweiche ausgestaltet sein, bei der eine umschaltbare Klappe zwischen einem Einlass für den Materialstrom und zwei unterschiedlichen Auslässen angeordnet ist und den Materialstrom alternativ in den einen oder den anderen Auslass führt, indem jeweils einer der beiden Auslässe von ihr blockiert wird.

In weiterer alternativer Ausgestaltung können auch eine oder beide Weichen als Drehweiche ausgestaltet sein. Eine solche Drehweiche ist in ihrer äußeren Form als Zylinder ausgebildet. Die vorstehend beschriebene erste Schiebeweiche kann durch eine erste Drehweiche ersetzt werden, welche in dem Materialdurchströmungsraum zwischen dem Einlassbereich und dem Messbereich drehbar gelagert ist und welche eine erste Durchtrittsöffnung für einen Durchtritt des Materialstroms vom Einlassbereich durch die erste Drehweiche in den Messbereich aufweist sowie eine zweite Durchtrittsöffnung für einen Durchtritt des Materialstroms vom Einlassbereich durch die erste Drehweiche in den Umlenkbereich aufweist. Die vorstehend beschriebene zweite Schiebeweiche kann durch eine zweite Drehweiche ersetzt werden, welche in dem Materialdurchströmungsraum zwischen dem Messbereich und dem Auslassbereich drehbar gelagert ist und welche eine erste Durchtrittsöffnung für einen Durchtritt des Materialstroms vom Messbereich durch die zweite Drehweiche in den Auslassbereich aufweist sowie eine zweite Durchtrittsöffnung für einen Durchtritt des Materialstroms vom Umlenkbereich durch die zweite Drehweiche in den Auslassbereich aufweist. Eine Drehweiche ist dabei vorzugsweise derart ausgestaltet, dass jeweils die erste Durchtrittsöffnung (vom Einlassbereich zum Messbereich bzw. vom Messbereich zum Auslassbereich) den Zylinder senkrecht zu seiner Hauptachse durchstößt. Die zweite Durchtrittsöffnung ist dabei derart ausgestaltet, dass ihr Einlass (zum Einlassbereich im Fall der ersten Drehweiche) beziehungsweise ihr Auslass (zum Auslassbereich im Fall der zweiten Drehweiche) auf einen Umfangskreis um den Zylinder der Drehweiche angeordnet, auf welchem auch Einlass und Auslass der ersten Durchtrittsöffnung liegen. Der Einlass der zweiten Durchgangsöffnung der ersten Drehweiche ist dabei vorzugsweise mittig zwischen dem Einlass und dem Auslass der ersten Durchgangsöffnung der ersten Drehweiche angeordnet. Entsprechend ist der Auslass der zweiten Durchgangsöffnung der zweiten Drehweiche vorzugsweise mittig zwischen dem Einlass und dem Auslass der ersten Durchgangsöffnung der zweiten Drehweiche angeordnet. Beide Weichen sind dabei derart angeordnet und eingerichtet, dass in jedem Schaltzustand in jeder Drehweiche jeweils eine Durchtrittsöffnung einem Materialdurchströmungsraum zugewendet ist.

In einer vorteilhaften Weiterbildung weist die erfindungsgemäße Vorrichtung zur Analyse eines Materialstroms zusätzlich auf: einen zweiten Einlassbereich für einen zweiten Materialstrom; eine dritte Weiche, angeordnet zwischen der ersten Weiche und dem Messbereich; eine vierte Weiche, angeordnet zwischen dem Messbereich und der zweiten Weiche; einen zweiten Auslassbereich für den zweiten Materialstrom, welche derart angeordnet und eingerichtet sind, dass in dem ersten Schaltzustand der ersten Weiche und der zweiten Weiche ein durchgängiger dritter Materialdurchströmungsraum vom Einlassbereich über die erste Weiche und die dritte Weiche durch den Messbereich und über die zweite Weiche und die vierte Weiche bis zum Auslassbereich ausgebildet ist, wobei der zweite Einlassbereich für den zweiten Materialstrom geschlossen ist; und dass in einem zweiten Schaltzustand der ersten Weiche und der zweiten Weiche ein durchgängiger zweiter Materialdurchströmungsraum vom Einlassbereich über die erste Weiche durch den Umlenkbereich über die zweite Weiche bis zum Auslassbereich ausgebildet ist und wobei ein durchgängiger vierter Materialdurchströmungsraum für den zweiten Materialstrom vom zweiten Einlassbereich über die dritte Weiche durch den Messbereich und über die vierte Weiche bis zum zweiten Auslassbereich ausgebildet ist.

Eine solche vorteilhafte Weiterbildung der erfindungsgemäßen Vorrichtung zur Analyse eines Materialstroms stellt in dem ersten Schaltzustand (der ersten Weiche und der zweiten Weiche) einen durchgängigen dritten Materialdurchströmungsraum (vom Einlassbereich über die erste Weiche und die dritte Weiche durch den Messbereich und über die zweite Weiche und die vierte Weiche bis zum Auslassbereich) bereit, durch den der Materialstrom ungehindert fließen kann während im Messbereich dieses Materialdurchströmungsraums die Analyse des Materialstroms erfolgen kann. Gleichzeitig ist der zweite Einlassbereich für den zweiten Materialstrom geschlossen. Hingegen steht in dem zweiten Schaltzustand (der ersten Weiche und der zweiten Weiche) ein durchgängiger zweiter Materialdurchströmungsraum (vom Einlassbereich über die erste Weiche durch den Umlenkbereich über die zweite Weiche bis zum Auslassbereich) bereit, durch den der erste Materialstrom ungehindert fließen kann während der Messbereich gereinigt oder kalibriert werden kann. Dafür ist in diesem zweiten Schaltzustand ein durchgängiger vierter Materialdurchströmungsraum (vom zweiten Einlassbereich über die dritte Weiche durch den Messbereich und über die vierte Weiche bis zum zweiten Auslassbereich) ausgebildet, durch den ein zweiter Materialstrom in Form eines Reinigungs- oder Kalibrations- oder Referenzfluids ungehindert - und ohne den ersten Materialstrom zu stören - fließen kann.

Auch die dritte und/oder vierte Weiche kann als Schiebeund/oder Klappweiche und/oder Drehweiche ausgestaltet sein.

In einer vorteilhaften Weiterbildung der erfindungsgemäßen Vorrichtung zur Analyse eines Materialstroms sind die erste Weiche und die dritte Weiche miteinander zu einer ersten gemeinsam schaltenden Doppelweiche kombiniert und sind die zweite Weiche und die vierte Weiche miteinander zu einer zweiten gemeinsam schaltenden Doppelweiche kombiniert. Diese Kombination vereinfacht den Umschaltvorgang von einem Messzustand zu einem Reinigungs-, Kalibrations- oder Referenzzustand des Materialdurchströmungsraums. Dabei können beide oder auch nur eine der Doppelweichen als Doppelschiebe-, -klapp- oder -drehweiche ausgestaltet sein.

In einer Ausgestaltung mit zwei Doppeldrehweichen sind beide Doppeldrehweichen in ihrer äußeren Form wieder als Zylinder ausgebildet. Analog wie vorstehend bezüglich der ersten Drehweiche beschrieben, weist die erste Doppeldrehweiche eine erste Durchtrittsöffnung für einen Durchtritt des Materialstroms vom Einlassbereich durch die erste Dopppeldrehweiche in den Messbereich auf sowie eine zweite Durchtrittsöffnung für einen Durchtritt des Materialstroms vom Einlassbereich durch die erste Doppeldrehweiche in den Umlenkbereich auf. Zusätzlich gegenüber der ersten Drehweiche weist die erste Doppeldrehweiche eine dritte Durchtrittsöffnung für einen Durchtritt eines zweiten Materialstroms vom zweiten Einlassbereich durch die erste Dopppeldrehweiche in den Messbereich auf, durch welchen der Messbereich gereinigt oder kalibriert werden kann. Analog wie vorstehend bezüglich der zweiten Drehweiche beschrieben, weist die zweite Doppeldrehweiche eine erste Durchtrittsöffnung für einen Durchtritt des Materialstroms vom Messbereich durch die zweite Doppeldrehweiche in den Auslassbereich auf sowie eine zweite Durchtrittsöffnung für einen Durchtritt des Materialstroms vom Umlenkbereich durch die zweite Doppeldrehweiche in den Auslassbereich auf. Zusätzlich gegenüber der zweiten Drehweiche weist die zweite Doppeldrehweiche eine dritte Durchtrittsöffnung für einen Durchtritt des zweiten Materialstroms vom Messbereich durch die zweite Dopppeldrehweiche in den Auslassbereich auf. Dabei entsprechen die erste Durchtrittsöffnung der ersten Dopppeldrehweiche und die zweite Durchtrittsöffnung der zweiten Dopppeldrehweiche hinsichtlich ihrer Ausgestaltung und Anordnung im Zylinder der ersten Durchtrittsöffnung der ersten Drehweiche und der zweiten Durchtrittsöffnung der zweiten Drehweiche während die zweite Durchtrittsöffnung der ersten Dopppeldrehweiche vorzugsweise identisch zu der ersten Durchtrittsöffnung ausgestaltet ist aber um 180° um die Hauptdrehachse des Zylinders gedreht angeordnet ist. Entsprechend ist die zweite Durchtrittsöffnung der zweiten Dopppeldrehweiche ausgestaltet und angeordnet.

In weiterer vorteilhafter Ausgestaltung ist der zweite Einlassbereich verbunden mit mindestens einem Vorratsbehälter für ein Reinigungsfluid und/oder mindestens einem Vorratsbehälter für ein Kalibrationsfluid und/oder mindestens einem Vorratsbehälter für ein Referenzfluid.

Das jeweilige Fluid ist dabei vorzugsweise flüssig. Alternativ oder additiv können aber auch Gase eingesetzt werden, insbesondere in einer Kombination, bei der zunächst eine Flüssigkeit verwendet wird und danach ein Gas, vorzugsweise Druckluft, um den Materialdurchströmungsraum auszublasen, insbesondere den ersten Materialdurchströmungsraum durch den danach wieder ein zu analysierender Materialstrom fließen soll und der nicht durch ansonsten evtl. verbleibende Reste des Fluids verunreinigt werden soll. Alternativ kann als Fluid auch eine Suspension (festkörperbeladene Flüssigkeit) oder eine Emulsion (flüssigkeitbeladene Flüssigkeit) oder ein Aerosol (festkörper- oder flüssigkeitbeladenes Gas) Anwendung finden oder in Ausnahmefällen sogar rieselfähige Partikeln.

In weiterer vorteilhafter Ausgestaltung ist der zweite Einlassbereich verbunden mit mindestens einem Vorratsbehälter für das mindestens eine Reinigungsfluid und mindestens einem Vorratsbehälter für das mindestens eine Kalibrationsfluid und/oder mindestens einem Vorratsbehälter für das mindestens eine Referenzfluid, wobei diese mindestens zwei Vorratsbehälter über eine Weiche jeweils einzeln mit dem zweiten Einlassbereich durchgehend verbindbar sind. Besonders vorteilhaft kann dies durch ein Revolvermagazin ausgestaltet sein, welches mehrere Vorratsbehälter enthält. Alternativ können aber auch separate jeweils druckbeaufschlagte und/oder jeweils mit einer Pumpvorrichtung versehene Vorratsbehälter vorgesehen sein, die mit dem zweiten Einlassbereich jeweils über ein Ventil verbunden sind und ihr jeweiliges Fluid durch Öffnen dieses Ventils bereitstellen können.

Außerdem ist es vorteilhaft die jeweiligen Materialdurchströmungsräume an ihren Schaltbereichen, d.h. an den Anknüpfbereichen der Weichen abzudichten. Dabei sind vorzugsweise Dichtungen vorzusehen, welche beständig sind gegenüber den verwendeten Fluiden, insbesondere Reinigungsfluiden in Form von Lösungsmitteln, und den Betriebstemperaturen. Geeignet in diesem Sinne sind Fluorkautschuke, insbesondere Polytetrafluorethylen, aber auch andere Elastomere oder metallische Dichtungen, insbesondere Metall-Komposit-Dichtungen wie Metall-Weichstoff-Dichtungen, Metall-Elastomer-Dichtungen oder Metall-Lagen-Dichtungen, oder auch keramische Dichtungen.

In einer vorteilhaften Weiterbildung der erfindungsgemäßen Vorrichtung zur Analyse eines Materialstroms ist zumindest der Messbereich temperierbar ausgestaltet, d.h. zumindest der Messbereich ist kühlbar und/oder heizbar. Eine derartige Ausgestaltung erlaubt es z.B. Messungen, insbesondere Kalibrations- oder Referenzmessungen bei definierten Temperaturen, insbesondere Standardtemperaturen oder Standardtemperaturprofilen, durchzuführen.

In weiterer vorteilhafter Ausgestaltung weist der Messbereich zumindest teilweise eine für eine Kalibrierung und/oder Referenzierung optimierte innere Oberfläche auf. Dazu weist er mindestens einen Oberflächenbereich auf, der definiert diffus streuend oder spekular reflektierend ausgebildet ist. Vorzugsweise ist dieser Oberflächenbereich austauschbar ausgestaltet, insbesondere als austauschbare Keramikplatte. Ein Austausch kann dabei auf einfache Weise im zweiten Schaltzustand erfolgen, bei welchem der Materialstrom durch den Umlenkbereich - also am Messbereich vorbei - geführt wird. In vorteilhaft einfacher Ausgestaltung weist die Wandung des Messbereichs seitlich mindestens eine verschliessbare Öffnung auf, durch welche ein Zugang zum Messbereich gegeben ist, der z.B. den vorstehend beschriebenen Austausch aber auch andere Maßnahmen innerhalb des Messbereichs ermöglicht. Der Verschluss dieser mindestens einen Öffnung ist in jedem Betriebszustand der Vorrichtung zur Analyse eines Materialstroms - also im ersten Schaltzustand im Messbetrieb und im zweiten Schaltzustand im Reinigungs-, Kalibrations- oder Referenzierungsbetrieb - notwendigerweise geschlossen. Der Verschluss ist derart eingerichtet, dass er nur geöffnet werden kann, wenn der jeweilige Betriebszustand unterbrochen ist, z.B. indem während des zweiten Schaltzustandes der Zufluss der einzelnen Fluide durch Schließen der jeweiligen Ventile unterbunden ist.

In besonders vorteilhafter Ausgestaltung der erfindungsgemäßen Vorrichtung ist diese zur Analyse eines Materialstroms beim Extrudieren oder Strangpressen, insbesondere beim Schmelzspinnen, und deshalb als Extrudermodul ausgestaltet. Vorzugsweise ist dieses derart ausgestaltet, dass es in einfacher Art und Weise in der Ausstoßzone des Extruders eingesetzt werden kann, d.h. in den Bereich zwischen dessen Förderschnecke und dessen Austrittsdüse. Dazu sind der Einlassbereich und der Auslassbereich der Vorrichtung an den Förderkanal des Extruders angepasst und geeignete Verbindungseinrichtungen vorgesehen.

Ein solches Extrudermodul erlaubt einen einfachen (auch nachträglichen) Einbau der erfindungsgemäßen Vorrichtung zur Analyse eines Materialstroms in handelsübliche Extruder, wodurch diese in die Lage versetzt werden, erforderliche Analysen durchzuführen ohne jeweils die Extrusion für Zwecke der Reinigung, Kalibrierung oder Referenzierung der Analysevorrichtung unterbrechen zu müssen.
In alternativer Ausgestaltung ist die erfindungsgemäße Vorrichtung zur Analyse eines Materialstroms beim Spritzguss und deshalb als Modul einer Spritzgussmaschine ausgestaltet.

Die Aufgabe wird bezüglich des Verfahrens zur Analyse eines Materialstroms erfindungsgemäß dadurch gelöst, dass der Materialstrom durch einen Materialdurchströmungsraum strömt und dabei in Durchströmungsrichtung einen Einlassbereich, einen Messbereich, ausgebildet zur Messung von Eigenschaften des Materialstroms und einen Auslassbereich durchströmt, wobei eine erste Weiche zwischen dem Einlassbereich und dem Messbereich angeordnet wird, eine zweite Weiche zwischen dem Messbereich und dem Auslassbereich angeordnet wird und ein Umlenkbereich zur Umlenkung des Materialstroms bereit gestellt wird, und dass in einem ersten Schaltzustand der ersten Weiche und der zweiten Weiche der Materialstrom vom Einlassbereich über die erste Weiche durch den Messbereich über die zweite Weiche bis zum Auslassbereich geführt wird, und dass in einem zweiten Schaltzustand der ersten Weiche und der zweiten Weiche der Materialstroms vom Einlassbereich über die erste Weiche durch den Umlenkbereich über die zweite Weiche bis zum Auslassbereich geführt wird.

Eine solches erfindungsgemäßes Verfahren zur Analyse eines Materialstroms stellt in dem ersten Schaltzustand (der ersten Weiche und der zweiten Weiche) einen durchgängigen ersten Materialdurchströmungsraum (vom Einlassbereich über die erste Weiche durch den Messbereich über die zweite Weiche bis zum Auslassbereich) bereit, durch den der Materialstrom ungehindert fließen kann während im Messbereich dieses Materialdurchströmungsraums die Analyse des Materialstroms erfolgen kann. Hingegen steht in dem zweiten Schaltzustand (der ersten Weiche und der zweiten Weiche) ein durchgängiger zweiter Materialdurchströmungsraum (vom Einlassbereich über die erste Weiche durch den Umlenkbereich über die zweite Weiche bis zum Auslassbereich) bereit, durch den der Materialstrom ungehindert fließen kann während der Messbereich gereinigt oder repariert werden kann.

Geeignete Messverfahren sind z.B. spektroskopische Verfahren, insbesondere die transmissive und/oder reflektive IR-(Infrarot, insbesondere NIR (nahes IR) oder MIR (mittleres (IR) oder FIR (fernes IR oder THz)), UV- (ultraviolett), VIS-(visuell) oder Raman-Spektroskopie oder Fluoreszenz-, insbesondere 2D-Fluoreszenz- oder Fluoreszenzlebensdauer-Spektroskopie.

Nachfolgend werden anhand der Figuren sowie der Ausführungsbeispiele die erfindungsgemäße Vorrichtung und das erfindungsgemäße Verfahren zur Analyse eines Materialstroms näher erläutert. Dabei zeigen die Figuren schematisch und nicht maßstabsgerecht:

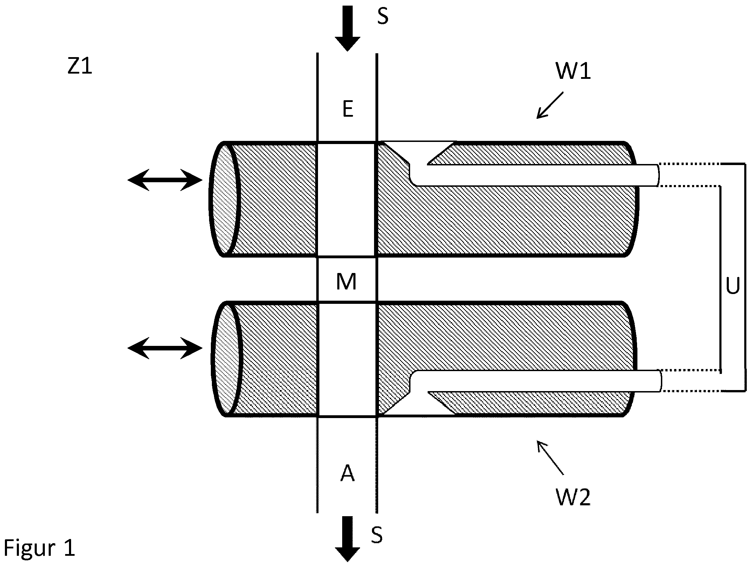

- Figur 1:: Die erfindungsgemäße Vorrichtung zur Analyse eines Materialstroms S mit einem Einlassbereich E, einem Messbereich M und einen Auslassbereich A sowie mit einer erste Weiche W1 und einer zweiten Weiche W2 und einem Umlenkbereich U in ihrem ersten Schaltzustand Z1, während dem ein durchgängiger erster Materialdurchströmungsraum vom Einlassbereich E über die erste Weiche W1 durch den Messbereich M über die zweite Weiche W2 bis zum Auslassbereich A ausgebildet ist.

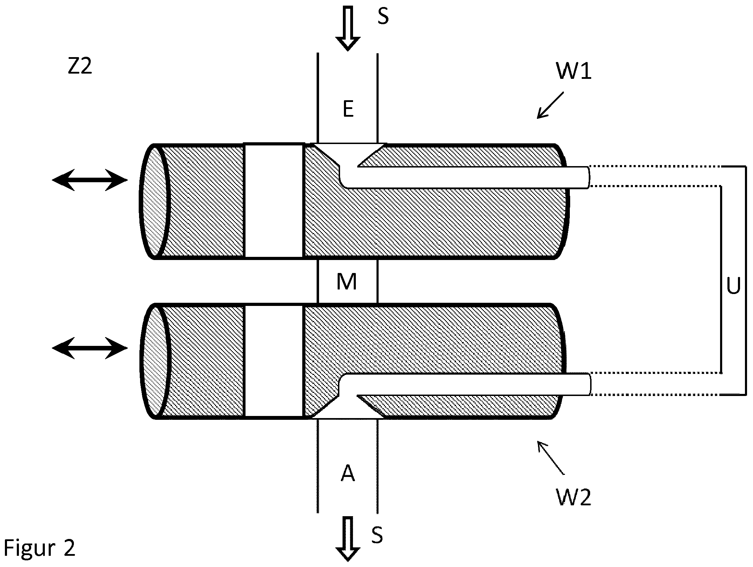

- Figur 2:: Die erfindungsgemäße Vorrichtung zur Analyse eines Materialstroms S in ihrem zweiten Schaltzustand Z2, während dem ein durchgängiger zweiter Material-durchströmungsraum vom Einlassbereich E über die erste Weiche W1 durch einen Umlenkbereich U über die zweite Weiche W2 bis zum Auslassbereich A ausgebildet ist.

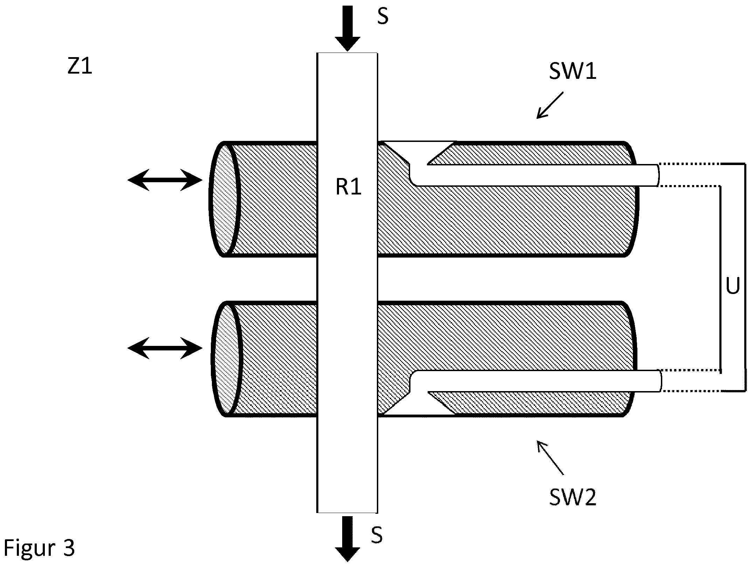

- Figur 3:: Die erfindungsgemäße Vorrichtung zur Analyse eines Materialstroms S in ihrem ersten Schaltzustand Z1 mit dem durchgängigen ersten Materialdurchströmungsraum R1 und ausgebildet mit einer ersten Schiebeweiche SW1 und einer zweiten Schiebeweiche SW2.

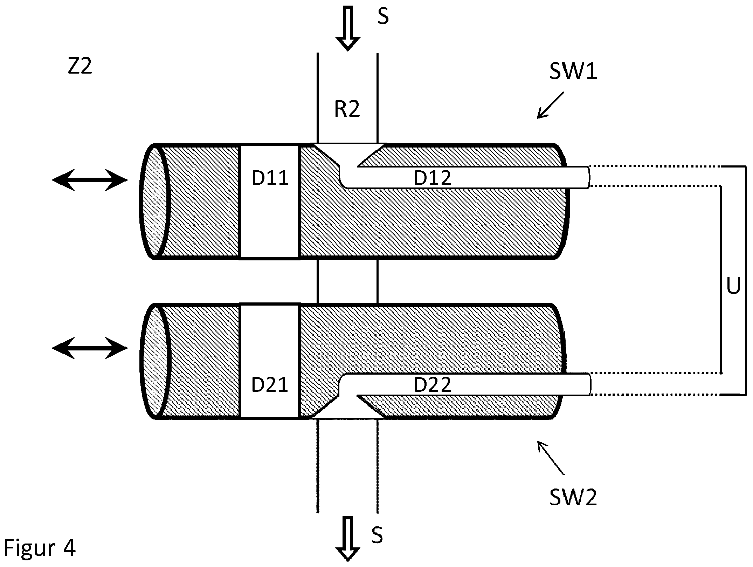

- Figur 4:: Die erfindungsgemäße Vorrichtung zur Analyse eines Materialstroms S in ihrem zweiten Schaltzustand Z2 mit dem durchgängigen zweiten Materialdurchströmungsraum R2 und ausgebildet mit einer ersten Schiebeweiche SW1 aufweisend eine erste Durchtrittsöffnung D11 und eine zweite Durchtrittsöffnung D12 und einer zweiten Schiebeweiche SW2 ebenfalls aufweisend eine erste Durchtrittsöffnung D21 und eine zweite Durchtrittsöffnung D22.

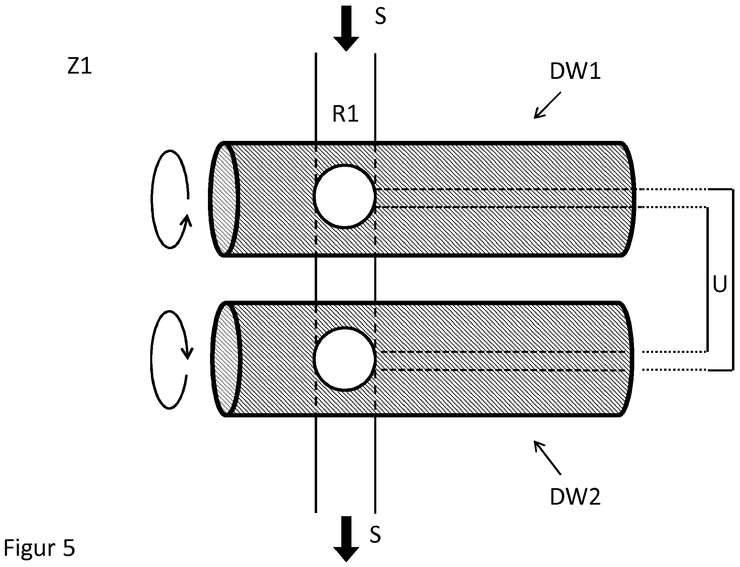

- Figur 5:: Die erfindungsgemäße Vorrichtung zur Analyse eines Materialstroms S in ihrem ersten Schaltzustand Z1 mit dem durchgängigen ersten Materialdurchströmungsraum R1 und ausgebildet mit einer ersten Drehweiche DW1 und einer zweiten Drehweiche DW2.

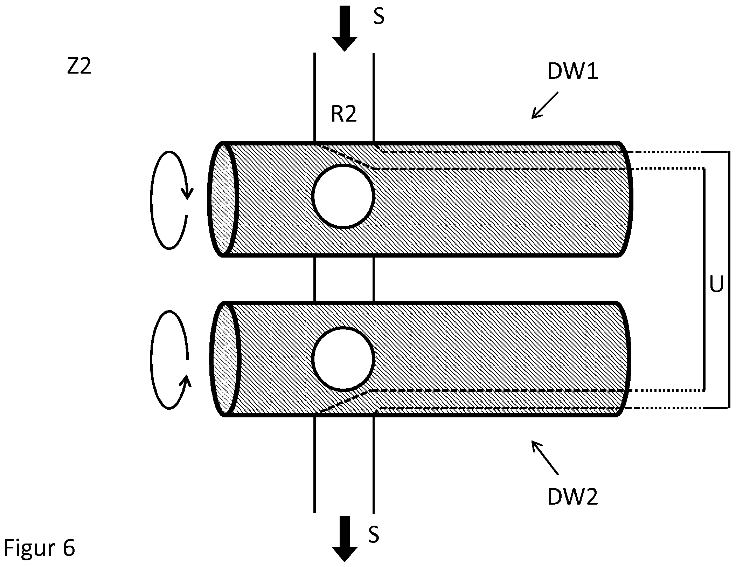

- Figur 6:: Die erfindungsgemäße Vorrichtung zur Analyse eines Materialstroms S in ihrem zweiten Schaltzustand Z2 mit dem durchgängigen zweiten Materialdurchströmungsraum R2 und ausgebildet mit einer ersten Drehweiche DW1 und einer zweiten Drehweiche DW2.

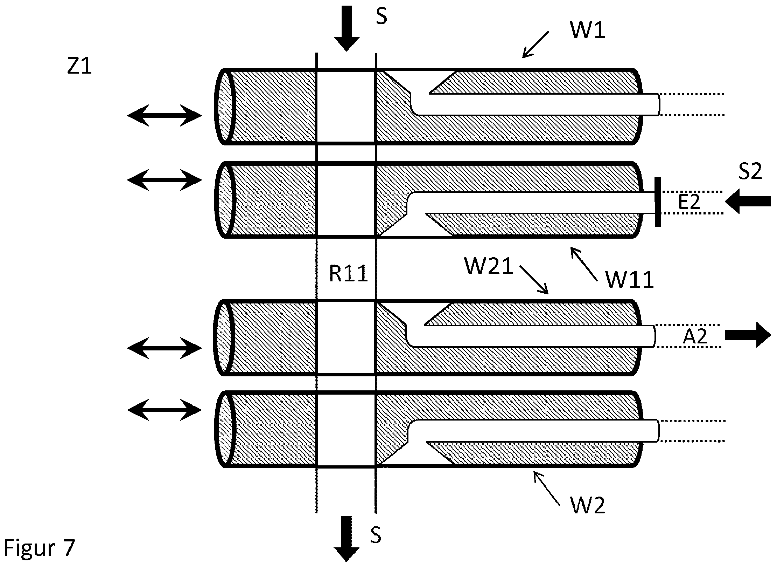

- Figur 7:: Eine weitere Ausgestaltung der erfindungsgemäßen Vorrichtung zur Analyse eines Materialstroms S in ihrem ersten Schaltzustand Z1 mit einem durchgängigen ersten Materialdurchströmungsraum R11 aufweisend neben der ersten Weiche W1 und der zweiten Weiche W2 eine dritte Weiche W11 und eine vierte Weiche W21 sowie einen zweiten Einlassbereich E2 und einen zweiten Auslassbereich A2 jeweils für einen zweiten Materialstrom S2.

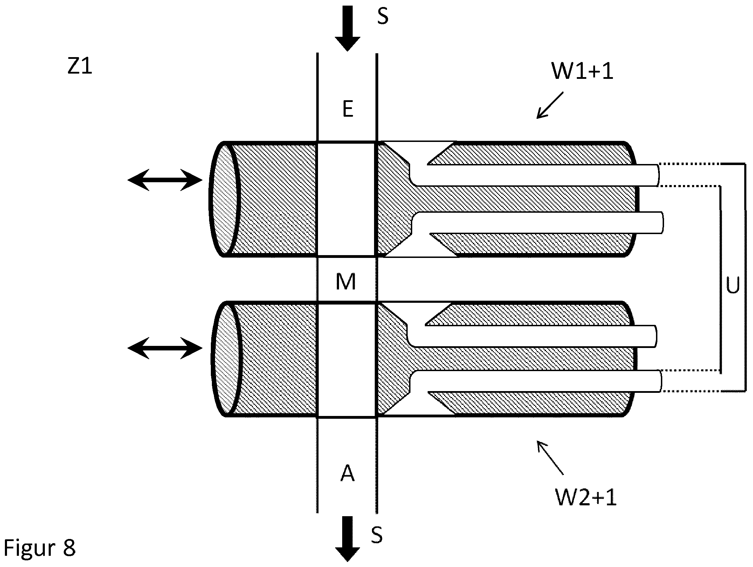

- Figur 8:: Eine weitere Ausgestaltung der erfindungsgemäßen Vorrichtung zur Analyse eines Materialstroms S in ihrem ersten Schaltzustand Z1 mit einem durchgängigen ersten Materialdurchströmungsraum aufweisend eine erste Kombination aus der ersten Weiche und der dritten Weiche zu einer ersten gemeinsam schaltenden Doppelweiche W1+1 sowie eine zweite Kombination aus der zweiten Weiche und der vierten Weiche zu einer zweiten gemeinsam schaltenden Doppelweiche W2+1.

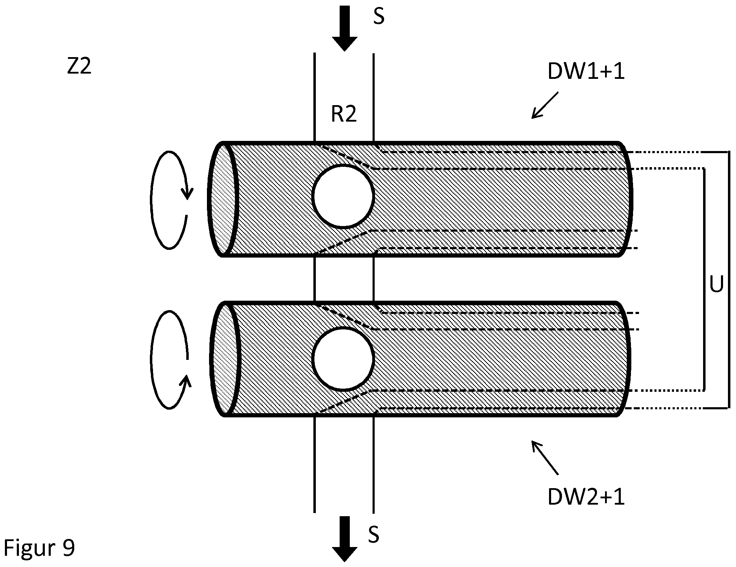

- Figur 9:: Eine weitere Ausgestaltung der erfindungsgemäßen Vorrichtung zur Analyse eines Materialstroms S in ihrem zweiten Schaltzustand Z2 mit einem durchgängigen zweiten Materialdurchströmungsraum R2 aufweisend eine erste Kombination aus der ersten Drehweiche und einer dritten Drehweiche zu einer ersten gemeinsam schaltenden Doppeldrehweiche DW1+1 sowie eine zweite Kombination aus der zweiten Drehweiche und einer vierten Drehweiche zu einer zweiten gemeinsam schaltenden Doppeldrehweiche DW2+1.

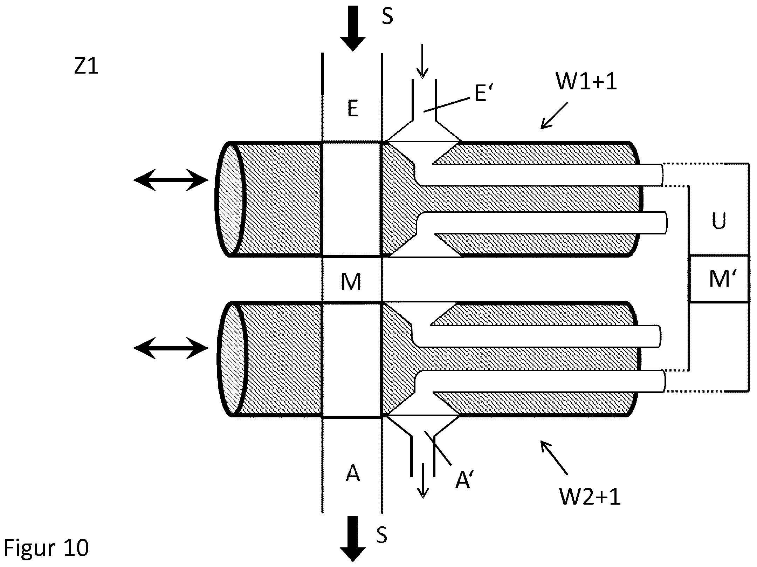

- Figur 10: Eine gegenüber Figur 8 modifizierte Variante der Erfindung.

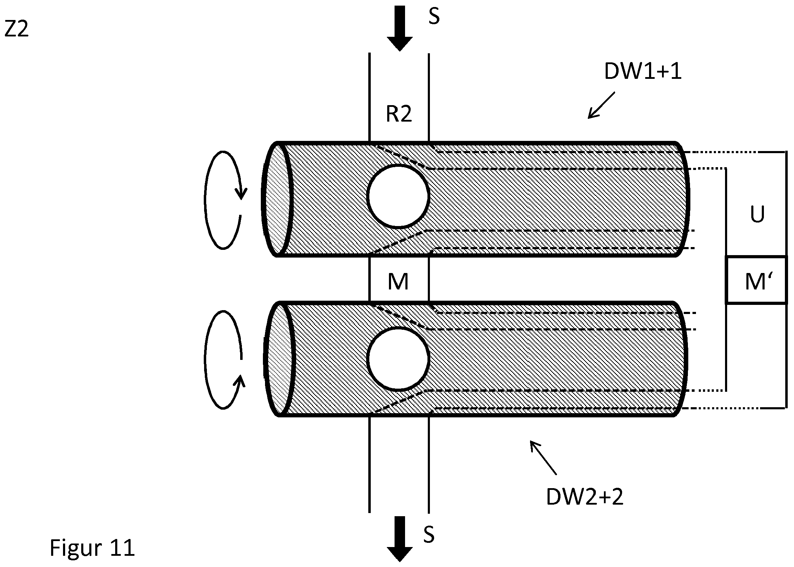

- Figur 11: Eine der in Figur 10 gezeigten Anordnung verwandte Variante der Erfindung für den Fall der Verwendung von Drehweichen.

Gemäß dem Ausführungsbeispiel ist die erfindungsgemäße Vorrichtung zur Analyse eines Materialstroms S als Extrudermodul ausgestaltet, welches in einfacher Art und Weise in der Ausstoßzone eines Extruders eingesetzt werden kann, d.h. in den Bereich zwischen dessen Förderschnecke und dessen Austrittsdüse. Dazu sind der Einlassbereich und der Auslassbereich der Vorrichtung an den Förderkanal des Extruders angepasst und geeignete Verbindungseinrichtungen vorgesehen.

**Figur 1** zeigt dazu eine erste beispielhafte Ausgestaltung der Vorrichtung zur Analyse eines Materialstroms S, welche mit einem Materialdurchströmungsraum versehen ist und in Durchströmungsrichtung einen Einlassbereich E, einen Messbereich M, ausgebildet zur Messung von Eigenschaften des Materialstroms S, und einen Auslassbereich A aufweist, sowie zusätzlich eine erste Weiche W1, angeordnet zwischen dem Einlassbereich E und dem Messbereich M, eine zweite Weiche W2, angeordnet zwischen dem Messbereich M und dem Auslassbereich A, sowie einen Umlenkbereich U des Materialdurchströmungsraums, welche derart angeordnet und eingerichtet sind, dass in einem ersten Schaltzustand Z1 der ersten Weiche W1 und der zweiten Weiche W2 ein durchgängiger erster Materialdurchströmungsraum R1 vom Einlassbereich E über die erste Weiche W1 durch den Messbereich M über die zweite Weiche W2 bis zum Auslassbereich A ausgebildet ist, während

**Figur 2** dieselbe Ausgestaltung der Vorrichtung zur Analyse eines Materialstroms S in einem zweiten Schaltzustand Z2 der ersten Weiche W1 und der zweiten Weiche W2 zeigt, bei dem ein durchgängiger zweiter Materialdurchströmungsraum R2 vom Einlassbereich E über die erste Weiche W1 durch den Umlenkbereich U über die zweite Weiche W2 bis zum Auslassbereich A ausgebildet ist.

**Figur 3** zeigt eine vergleichbare Ausgestaltung der Vorrichtung zur Analyse eines Materialstroms S, bei der die erste Weiche als Schiebeweiche SW1 und die zweite Weiche als Schiebeweiche SW2 ausgebildet ist.

**Figur 4** zeigt für die Ausgestaltung nach Figur 3 wie die erste Schiebeweiche SW1 eine erste Durchtrittsöffnung D11 aufweist, welche im (hier nicht gezeigten) Schaltzustand Z1 den Durchtritt des Materialstroms S vom Einlassbereich E durch die erste Schiebeweiche SW1 hin zum Messbereich M erlaubt, sowie eine zweite Durchtrittsöffnung D12 aufweist, welche im (hier gezeigten) Schaltzustand Z2 den Durchtritt des Materialstroms S vom Einlassbereich E durch die erste Schiebeweiche SW1 hin zum Umlenkbereich U erlaubt, und wie die zweite Schiebeweiche SW2 eine erste Durchtrittsöffnung D21 aufweist, welche im (hier nicht gezeigten) Schaltzustand Z1 den Durchtritt des Materialstroms S vom Messbereich M durch die zweite Schiebeweiche SW2 hin zum Auslassbereich A erlaubt, sowie eine zweite Durchtrittsöffnung D22 aufweist, welche im (hier gezeigten) Schaltzustand Z2 den Durchtritt des Materialstroms S vom Umlenkbereich U durch die zweite Schiebeweiche SW2 hin zum Auslassbereich A erlaubt.

**Figur 5** zeigt eine der Figur 3 vergleichbare Ausgestaltung der Vorrichtung zur Analyse eines Materialstroms S im Schaltzustand Z1, bei welcher die erste Weiche als erste Drehweiche DW1 und die zweite Weiche als zweite Drehweiche DW2 ausgebildet ist. Ein Wechsel in den (hier nicht gezeigten) Schaltzustand Z2 erfolgt durch Drehen der beiden Drehweichen DW1 und DW2 in die durch die jeweiligen Kreispfeile angezeigten Drehrichtungen.

**Figur 6** zeigt die Ausgestaltung nach Figur 5 in ihrem Schaltzustand Z2.

**Figur 7** zeigt eine weitere Variante, welche neben den Komponenten der Figur 4 wie der ersten Weiche W1 und der zweiten Weiche W2 eine dritte Weiche W11 und eine vierte Weiche W21 sowie einen zweiten Einlassbereich E2 und einen zweiten Auslassbereich A2 jeweils für einen zweiten Materialstrom S2 aufweist und in ihrem (hier gezeigten) Schaltzustand Z1 den Durchtritt des Materialstroms S vom Einlassbereich E durch die erste Weiche W1 und die dritte Weiche W11 hin zum Messbereich M und von dort durch die vierte Weiche W21 und die zweite Weiche W2 hin zum Auslassbereich A erlaubt und dadurch einen dritten Materialdurchströmungsraum R11 ausbildet.

**Figur 8** zeigt eine zur Figur 7 ähnliche Variante, bei der die erste Weiche und die dritte Weiche gemäß der Figur 7 zu einer ersten gemeinsam schaltenden Doppelweiche W1+1 kombiniert sind, sowie die zweite Weiche und die vierte Weiche gemäß der Figur 7 zu einer zweiten gemeinsam schaltenden Doppelweiche W2+1 kombiniert sind. Dabei ist die erste gemeinsam schaltende Doppelweiche W1+1 angeordnet zwischen dem Einlassbereich E und dem Messbereich M und die zweite gemeinsam schaltende Doppelweiche W2+1 angeordnet zwischen dem Messbereich M und dem Auslassbereich A. Figur 8 zeigt dabei den Schaltzustand Z1 der ersten gemeinsam schaltenden Doppelweiche W1+1 und der zweiten gemeinsam schaltenden Doppelweiche W2+1, bei dem ein durchgängiger erster Materialdurchströmungsraum R11 vom Einlassbereich E über eine erste Durchtrittsöffnung D11 der ersten gemeinsam schaltenden Doppelweiche W1+1 durch den Messbereich M über eine erste Durchtrittsöffnung D21 der zweiten gemeinsam schaltenden Doppelweiche W2+1 bis zum Auslassbereich A ausgebildet ist. In einem (hier nicht gezeigten) zweiten Schaltzustand der ersten gemeinsam schaltenden Doppelweiche W1+1 und der zweiten gemeinsam schaltenden Doppelweiche W2+1 ist ein durchgängiger vierter Materialdurchströmungsraum R22 vom Einlassbereich E über einen zweite Durchtrittsöffnung D12 der ersten gemeinsam schaltenden Doppelweiche W1+1 durch den Umlenkbereich U über eine zweite Durchtrittsöffnung D22 der zweiten gemeinsam schaltenden Doppelweiche W2+1 bis zum Auslassbereich A ausgebildet.

In diesem Ausführungsbeispiel sind beide Doppelweichen W1+1, W2+1 als Schiebeweichen ausgebildet.

**Figur 9** zeigt eine zur Figur 8 ähnliche Variante, bei der beide Doppelweichen als Doppeldrehweichen DW1+1 und DW2+1 ausgebildet sind in ihrem zweiten Schaltzustand Z2 mit einem durchgängigen zweiten Materialdurchströmungsraum R2.

Der zweite Einlassbereich E2 für den zweiten Materialstrom S2 (gemäß Figur 7) ist mit einem Revolvermagazin verbunden, welches Vorratsbehälter für eine Reinigungsflüssigkeit, für ein Reinigungsgas, für eine Kalibrationsflüssigkeit und für eine Referenzflüssigkeit aufweist sowie eine Steuereinheit zur Steuerung des Revolvermagazins, derart, dass der jeweils benötigte Vorratsbehälter dem zweiten Einlassbereich E2 zugewendet und geöffnet ist während die anderen Vorratsbehälter abgewandt und geschlossen sind.

In dem zweiten (hier nicht gezeigten) Schaltzustand der ersten gemeinsam schaltenden Doppelweiche W1+1 und der zweiten gemeinsam schaltenden Doppelweiche W2+1 kann somit der zweite Materialstrom S2 aus dem Revolvermagazin durch den zweiten Einlassbereich E2 und die zweite Durchtrittsöffnung D12 der ersten gemeinsam schaltenden Doppelweiche W1+1 in den Messbereich M und von dort durch die zweite Durchtrittsöffnung D12 der zweiten gemeinsam schaltenden Doppelweiche W2+1 in den zweiten Auslassbereich A2 geführt werden.

Gemäß diesem Ausführungsbeispiel steuert die Steuereinheit für eine Reinigung des Messbereichs das Revolvermagazin derart an, dass zuerst der Vorratsbehälter mit der Reinigungsflüssigkeit dem zweiten Einlassbereich E2 zugewendet und geöffnet ist, worauf die Reinigungsflüssigkeit in Form eines das Extrudat lösenden Lösungsmittels durch den Messbereich strömt und diesen reinigt. Danach steuert die Steuereinheit das Revolvermagazin derart an, dass nachfolgend der Vorratsbehälter mit dem Reinigungsgas dem zweiten Einlassbereich E2 zugewendet und geöffnet ist, worauf das Reinigungsgas in Form von Druckluft durch den Messbereich strömt und aus diesem verbliebene Reste der Reinigungsflüssigkeit ausbläst.

Gemäß diesem Ausführungsbeispiel steuert die Steuereinheit für eine Kalibration des Messbereichs das Revolvermagazin derart an, dass zunächst eine vorstehend beschriebene Reinigung durchgeführt wird und anschließend steuert die Steuereinheit das Revolvermagazin derart an, dass nun der Vorratsbehälter mit der Kalibrationsflüssigkeit dem zweiten Einlassbereich E2 zugewendet und geöffnet ist, worauf die Kalibrationsflüssigkeit durch den Messbereich strömt und dieser mittels üblicher Methodik kalibriert wird.

Entsprechend steuert die Steuereinheit für eine Referenzierung des Messbereichs das Revolvermagazin derart an, dass nun der Vorratsbehälter mit der Referenzflüssigkeit dem zweiten Einlassbereich E2 zugewendet und geöffnet ist, worauf die Referenzflüssigkeit durch den Messbereich strömt und die Referenzmessung erfolgen kann.

Für eine Kalibrierung und/oder Referenzierung weist der Messbereich eine optimierte innere Oberfläche auf. Diese ist als durch einfaches Einschieben austauschare Keramikplatte ausgestaltet, welche in ihren verschiedenen austauschbaren Ausgestaltungen definiert diffus streuend oder spekular reflektierend ausgebildet ist. Ein Austausch kann dabei auf einfache Weise im zweiten Schaltzustand Z2 erfolgen, bei welchem der Materialstrom S des Extrudats durch den Umlenkbereich U - also am Messbereich M vorbei - geführt wird.

Bei diesem Ausführungsbeispiel sind sämtliche Materialdurchströmungsräume an ihren Schaltbereichen, d.h. an den Anschlussbereichen der Weichen mit lösungsmittel- und betriebstemperaturbeständigungen sowie gleitfähigen Dichtungen aus Fluorkautschuk oder anderen geeigneten Materialien abgedichtet.

Des Weiteren ist der Messbereich M temperierbar ausgestaltet, und zwar ist er sowohl kühlbar als auch heizbar ausgestaltet. Eine derartige Ausgestaltung erlaubt es z.B. Messungen, insbesondere Kalibrations- oder Referenzmessungen bei definierten Temperaturen, insbesondere Standardtemperaturen oder Standardtemperaturprofilen, durchzuführen.

Gemäß einem Ausführungsbeispiel wird das erfindungsgemäße Verfahren zur Analyse eines Materialstroms S in einem Extrudermodul nach vorstehend beschrieben angewendet, welches wie vorstehend beschrieben in einfacher Art und Weise in der Ausstoßzone eines Extruders eingesetzt wird.

Dazu wird das Extrudat zum Einlassbereich E geführt und strömt von dort in einem ersten Schaltzustand Z1 über die erste Weiche W1 durch den Messbereich M über die zweite Weiche W2 bis zum Auslassbereich A.

Für eine Reinigung des Messbereichs M wird das Extrudermodul in den zweiten Schaltzustand Z2 geschaltet, wodurch das Extrudat über die erste Weiche W1 durch den Umlenkbereich U über die zweite Weiche W2 bis zum Auslassbereich A geführt wird, während der Messbereich gereinigt werden kann ohne die Extrusion zu unterbrechen.

Die erfindungsgemäße Vorrichtung und das erfindungsgemäße Verfahren zur Analyse eines Materialstroms zeichnen sich durch einfache Integration in bestehende Verfahrensströme aus.

Eine bevorzugte Anwendung für die erfindungsgemäße Vorrichtung und das erfindungsgemäße Verfahren zur Analyse eines Materialstroms stellt die Extrusion dar. Dort bestand bereits seit langem Bedarf nach einer zuverlässigen Qualitätskontrolle durch verlässliche Messung von Eigenschaften des Extrudats, jedoch wurde diese bislang durch häufige Verschmutzung des Messbereichs und aufwändige Umbauten zur Durchführung der erforderlichen Reinigung erschwert. Diese Problematik wird durch die erfindungsgemäße Vorrichtung und das erfindungsgemäße Verfahren zur Analyse eines Materialstroms auf deutlich einfacher und schneller handhabbare Art und Weise gelöst.

Darüber hinaus erlauben die erfindungsgemäße Vorrichtung und das erfindungsgemäße Verfahren zur Analyse eines Materialstroms eine vereinfachte Kalibration und Referenzierung des Messbereichs.

**Figur 10** zeigt eine gegenüber Figur 8 modifizierte Variante der Erfindung, welche eine ununterbrochene Überwachung des Materialstromes S auch während der Reinigung einer Messsonde oder eines Messraums oder während eines Kalibriervorganges erlaubt. Die in Figur 10 gezeigte Anordnung unterscheidet sich von der Anordnung aus Figur 8 insbesondere dadurch, dass der Umlenkbereich U einen weiteren Messbereich M' enthält, in welchen beispielsweise eine Sonde L' eingebracht werden kann In der Figur ist exemplarisch auch eine Sonde L im Messbereich M gezeigt; es versteht sich von selbst, dass die gezeigten Sonden auch in allen anderen beschriebenen und gezeigten Ausführungsformen verwendet werden können. Die Sonden können insbesondere als Standard ½" UNF Sonden ausgeführt sein und insbesondere zur Führung von Messstrahlung mit Lichtleiter, beispielsweise Lichtleitfasern, ausgestattet sein. Vorteilhaft an der Verwendung von Sonden wie in der Figur 10 gezeigt ist insbesondere deren leichte Tauschbarkeit, beispielsweise zu Wartungszwecken oder zu einem Wechsel eines beispielsweise spektroskopischen Messverfahrens. Weiterhin erkennbar in Figur 10 sind der Einlassbereich E' und Auslassbereich A', durch welchen beispielsweise eine Spülflüssigkeit oder ein Kalibriermedium dem Messbereich M' zugeführt bzw. aus diesem abgeführt werden kann. Im gezeigten Schaltzustand durchtritt der Materialstrom den Einlassbereich E, passiert den Messbereich M und den Auslassbereich A, und wird während des Durchtretens des Messbereiches M in der vorne bereits beschriebenen Weise von einer Sonde oder anderen spektroskopischen Mitteln hinsichtlich seiner Zusammensetzung und Qualität untersucht. Parallel kann die Reinigung des Messbereiches M' beispielsweise durch Spülen mit einer Spülflüssigkeit erfolgen; nach erfolgter Reinigung von M' steht der Materialdurchströmungsraum durch E', U, M' und A' für Fälle zur Verfügung, in welchen eine Reinigung des Messbereiches M erforderlich ist. In diesem Fall wird die gezeigte Anordnung aus den beiden Weichen W1+1 und W2+1 synchron nach links verschoben, bis durch den Einlassbereich E der Umlenkbereich U und der in ihm angeordnete Messbereich M' versorgt werden kann; nach Passieren des Messbereichs M' wird in dieser Schaltposition der Materialstrom S dem Auslassbereich A zugeführt, so dass zu keinem Zeitpunkt der Auslassbereich von nicht vermessenem Material erreicht wird.

**Figur 11** zeigt eine der in Figur 10 gezeigten Anordnung verwandte Variante der Erfindung für den Fall von Drehweichen, ähnlich wie in Figur 9 gezeigt. In einer gegenüber der Darstellung in Figur 11 um 90 Grad verdrehten Position der Drehweichen DW1+1 und DW2+2 in Richtung der gezeigten Pfeile ist der Durchflussraum R2 durchgängig offen und der Messbereich M wird durchströmt. In dieser Position können dann die Anschlüsse, welche mit dem Messbereich M' verbunden sind, in Kontakt mit einer Leitung für Reinigungs- oder Kalibrierflüssigkeit stehen. Die Verbindung zwischen den Drehweichen und dem zweiten Messraum M' kann insbesondere durch einen flexiblen Schlauch, eine Bohrung bzw. einem Kanal innerhalb der Drehweiche oder ähnliches gewährleistet werden, um einen störungsfreien Materialfluss bzw. Fluidfluss auch nach einer Drehung der Drehweichen DW1+1 und DW2+2 sicher zu stellen. Besonders vorteilhaft in der gezeigten Anordnung ist die Möglichkeit, für einen kontinuierlichen Materialfluss bei gleichzeitiger Reinigungsmöglichkeit eines Messbereiches oder einer darin angeordneten Sonde zu sorgen.

### Bezugszeichenliste

- S: Materialstrom
- E, E': Einlassbereich
- M, M': Messbereich
- A, A': Auslassbereich
- W1: Erste Weiche
- W2: Zweite Weiche
- U: Umlenkbereich
- Z1: erster Schaltzustand
- R1: erster Materialdurchströmungsraum
- Z2: zweiter Schaltzustand
- R2: zweiter Materialdurchströmungsraum (über den Umlenkbereich)

- SW1: erste Schiebeweiche
- SW2: zweite Schiebeweiche
- D11: erste Durchtrittsöffnung der ersten Schiebeweiche
- D12: zweite Durchtrittsöffnung der ersten Schiebeweiche
- D21: erste Durchtrittsöffnung der zweiten Schiebeweiche
- D22: zweite Durchtrittsöffnung der ersten Schiebeweiche
- DW1: erste Drehweiche
- DW2: zweite Drehweiche

- S2: zweiter Materialstrom
- E2: zweiter Einlassbereich
- A2: zweiter Auslassbereich
- W11: dritte Weiche
- W21: vierte Weiche
- R11: dritter Materialdurchströmungsraum
- R22: vierter Materialdurchströmungsraum (über den Umlenkbereich)
- W1+1: erste gemeinsam schaltende Doppelweiche
- W2+1: zweite gemeinsam schaltende Doppelweiche
- L, L': Sonde

## Patentansprüche

1. Vorrichtung zur Analyse eines Materialstroms (S) mit einem Materialdurchströmungsraum und
aufweisend in Durchströmungsrichtung
• einen Einlassbereich (E),
• einen Messbereich (M), ausgebildet zur Messung von Eigenschaften des Materialstroms (S) und
• einen Auslassbereich (A),
**dadurch gekennzeichnet,**
**dass** die Vorrichtung zusätzlich aufweist
• eine erste Weiche (W1),
angeordnet zwischen dem Einlassbereich (E) und dem Messbereich (M),
• eine zweite Weiche (W2),
angeordnet zwischen dem Messbereich (M) und dem Auslassbereich (A),
• einen Umlenkbereich (U) des Materialdurchströmungsraums,
welche derart angeordnet und eingerichtet sind,
• **dass** in einem ersten Schaltzustand (Z1) der ersten Weiche (W1) und der zweiten Weiche (W2) ein durchgängiger erster Materialdurchströmungsraum (R1) vom Einlassbereich (E) über die erste Weiche (W1) durch den Messbereich (M) über die zweite Weiche (W2) bis zum Auslassbereich (A) ausgebildet ist,
• **dass** in einem zweiten Schaltzustand (Z2) der ersten Weiche (W1) und der zweiten Weiche (W2) ein durchgängiger zweiter Materialdurchströmungsraum (R2) vom Einlassbereich (E) über die erste Weiche (W1) durch den Umlenkbereich (U) über die zweite Weiche (W2) bis zum Auslassbereich (A) ausgebildet ist.

2. Vorrichtung zur Analyse eines Materialstroms (S) nach Anspruch 1,
**dadurch gekennzeichnet,**
• **dass** die erste Weiche (W1) ausgebildet ist als erste Schiebeweiche (SW1),
welche in den Materialdurchströmungsraum (R1) zwischen den Einlassbereich (E) und den Messbereich (M) einschiebbar ist und
∘ welche eine erste Durchtrittsöffnung (D11) für einen Durchtritt des Materialstroms (S) vom Einlassbereich (E) durch die erste Schiebeweiche (SW1) in den Messbereich (M) und
∘ welche eine zweite Durchtrittsöffnung (D12) für einen Durchtritt des Materialstroms (S) vom Einlassbereich (E) durch die erste Schiebeweiche (SW1) in den Umlenkbereich (U) aufweist,
und/oder
• **dass** die zweite Weiche (W2) ausgebildet ist als zweite Schiebeweiche (SW2),
welche in den Materialdurchströmungsraum (R1) zwischen den Messbereich (M) und den Auslassbereich (A) einschiebbar ist und
∘ welche eine erste Durchtrittsöffnung (D21) für einen Durchtritt des Materialstroms (S) vom Messbereich (M) durch die zweite Schiebeweiche (SW2) in den Auslassbereich (A) und
∘ welche eine zweite Durchtrittsöffnung (D22) für einen Durchtritt des Materialstroms (S) vom Umlenkbereich (U) durch die zweite Schiebeweiche (SW2) in den Auslassbereich (A) aufweist,
welche derart angeordnet und eingerichtet sind, dass in jedem Schaltzustand (Z1, Z2) in jeder Schiebeweiche (SW1, SW2) jeweils eine Durchtrittsöffnung (D11, D12; D21, D22) einem Materialdurchströmungsraum (R1, R2) zugewendet ist.

3. Vorrichtung zur Analyse eines Materialstroms (S) nach Anspruch 1,
**dadurch gekennzeichnet,**
• **dass** die erste Weiche (W1) ausgebildet ist als erste Drehweiche (DW1),
welche in dem Materialdurchströmungsraum (R1) zwischen dem Einlassbereich (E) und dem Messbereich (M) drehbar gelagert ist und
∘ welche eine erste Durchtrittsöffnung für einen Durchtritt des Materialstroms (S) vom Einlassbereich (E) durch die erste Drehweiche (DW1) in den Messbereich (M) und
∘ welche eine zweite Durchtrittsöffnung für einen Durchtritt des Materialstroms (S) vom Einlassbereich (E) durch die erste Drehweiche (DW1) in den Umlenkbereich (U) aufweist,
und/oder
• **dass** die zweite Weiche (W2) ausgebildet ist als zweite Drehweiche (DW2),
welche in dem Materialdurchströmungsraum (R1) zwischen dem Messbereich (M) und dem Auslassbereich (A) drehbar gelagert ist und
∘ welche eine erste Durchtrittsöffnung für einen Durchtritt des Materialstroms (S) vom Messbereich (M) durch die zweite Drehweiche (DW2) in den Auslassbereich (A) und
∘ welche eine zweite Durchtrittsöffnung für einen Durchtritt des Materialstroms (S) vom Umlenkbereich (U) durch die zweite Drehweiche (DW2) in den Auslassbereich (A) aufweist, welche derart angeordnet und eingerichtet sind, dass in jedem Schaltzustand (Z1, Z2) in jeder Drehweiche (DW1, DW2) jeweils eine Durchtrittsöffnung einem Materialdurchströmungsraum (R1, R2) zugewendet ist.

4. Vorrichtung zur Analyse eines Materialstroms (S) nach Anspruch 1, 2 oder 3,
**dadurch gekennzeichnet,**
**dass** die Vorrichtung zusätzlich aufweist
• einen zweiten Einlassbereich (E2) für einen zweiten Materialstrom (S2),
• eine dritte Weiche (W11),
angeordnet zwischen der ersten Weiche (W1) und dem Messbereich (M),
• eine vierte Weiche (W21),
angeordnet zwischen dem Messbereich (M) und der zweiten Weiche (W2),
• einen zweiten Auslassbereich (A2) für den zweiten Materialstrom (S2),
welche derart angeordnet und eingerichtet sind,
• **dass** in dem ersten Schaltzustand (Z1) der ersten Weiche (W1) und der zweiten Weiche (W2)
∘ ein durchgängiger dritter Materialdurchströmungsraum (R11) vom Einlassbereich (E) über die erste Weiche (W1), die dritte Weiche (W11) durch den Messbereich (M) über die zweite Weiche (W2) und die vierte Weiche (W21) bis zum Auslassbereich (A) ausgebildet ist und
∘ der zweite Einlassbereich (E2) für den zweiten Materialstrom (S2) geschlossen ist,
• **dass** in einem zweiten Schaltzustand (Z2) der ersten Weiche (W1) und der zweiten Weiche (W2)
∘ ein durchgängiger zweiter Materialdurchströmungsraum (R2) vom Einlassbereich (E) über die erste Weiche (W1) durch den Umlenkbereich (U) über die zweite Weiche (W2) bis zum Auslassbereich (A) ausgebildet ist und
∘ ein durchgängiger vierter Materialdurchströmungsraum (R22) für den zweiten Materialstrom (S2) vom zweiten Einlassbereich (E2) über die dritte Weiche (W11) durch den Messbereich (M) über die vierte Weiche (W21) bis zum zweiten Auslassbereich (A2) ausgebildet ist.

5. Vorrichtung zur Analyse eines Materialstroms (S) nach Anspruch 4,
**dadurch gekennzeichnet,**
• **dass** die erste Weiche (W1) und die dritte Weiche (W11) miteinander zu einer ersten gemeinsam schaltenden Doppelweiche (W1+1) kombiniert sind und
• **dass** die zweite Weiche (W1) und die vierte Weiche (W21) miteinander zu einer zweiten gemeinsam schaltenden Doppelweiche (W2+1) kombiniert sind.

6. Vorrichtung zur Analyse eines Materialstroms (S) nach Anspruch 4 oder 5,
**dadurch gekennzeichnet,**
**dass** der zweite Einlassbereich (E2) verbunden ist mit
• mindestens einem Vorratsbehälter für ein Reinigungsfluid und/oder
• mindestens einem Vorratsbehälter für ein Kalibrationsfluid und/oder
• mindestens einem Vorratsbehälter für ein Referenzfluid.

7. Vorrichtung zur Analyse eines Materialstroms (S) nach Anspruch 6,
**dadurch gekennzeichnet,**
**dass** der zweite Einlassbereich (E2) verbunden ist mit mindestens einem Vorratsbehälter für das mindestens eine Reinigungsfluid und mindestens einem Vorratsbehälter für das mindestens eine Kalibrationsfluid und/oder mindestens einem Vorratsbehälter für das mindestens eine Referenzfluid, wobei die mindestens zwei Vorratsbehälter über eine Weiche jeweils einzeln mit dem zweiten Einlassbereich (E2) durchgehend verbindbar sind.

8. Vorrichtung zur Analyse eines Materialstroms (S) nach einem der vorhergehenden Ansprüche,
**dadurch gekennzeichnet,**
**dass** der Messbereich (M) temperierbar ausgestaltet ist.

9. Vorrichtung zur Analyse eines Materialstroms (S) nach einem der vorhergehenden Ansprüche,
**dadurch gekennzeichnet,**
**dass** der Messbereich (M) zumindest teilweise eine für eine Kalibrierung und/oder Referenzierung optimierte innere Oberfläche aufweist.

10. Vorrichtung zur Analyse eines Materialstroms (S) nach einem der vorhergehenden Ansprüche,
**dadurch gekennzeichnet,**
**dass** sie als Extrudermodul ausgestaltet ist.

11. Vorrichtung zur Analyse eines Materialstroms (S) nach einem der vorhergehenden Ansprüche,
**dadurch gekennzeichnet,**
**dass** zusätzlich zu dem ersten Messbereich (M) ein weiterer Messbereich (M') vorhanden ist, welche von dem Materialstrom durchtreten werden kann.

12. Verfahren zur Analyse eines Materialstroms (S),
der durch einen Materialdurchströmungsraum strömt und dabei in Durchströmungsrichtung
• einen Einlassbereich (E),
• einen Messbereich (M),
ausgebildet zur Messung von Eigenschaften des Materialstroms (S) und
• einen Auslassbereich (A)
durchströmt
**dadurch gekennzeichnet,**
**dass**
• eine erste Weiche (W1)
zwischen dem Einlassbereich (E) und dem Messbereich (M) angeordnet wird,
• eine zweite Weiche (W2)
zwischen dem Messbereich (M) und dem Auslassbereich (A) angeordnet wird,
• ein Umlenkbereich (U) zur Umlenkung des Materialstroms (S) bereit gestellt wird,
und,
• **dass** in einem ersten Schaltzustand (Z1) der ersten Weiche (W1) und der zweiten Weiche (W2) der Materialstrom (S) vom Einlassbereich (E) über die erste Weiche (W1) durch den Messbereich (M) über die zweite Weiche (W2) bis zum Auslassbereich (A) geführt wird,
• **dass** in einem zweiten Schaltzustand (Z2) der ersten Weiche (W1) und der zweiten Weiche (W2) der Materialstrom (S) vom Einlassbereich (E) über die erste Weiche (W1) durch den Umlenkbereich (U) über die zweite Weiche (W2) bis zum Auslassbereich (A) geführt wird.
